# EUROPEAN PATENT APPLICATION

(11) **EP 4 717 589 A1**
(43) Date of publication of application: **01.04.2026**
(21) Application number: 23213922.0
(22) Date of filing: 04.12.2023
(51) Int. Cl.: B64C 5/02, B64D 27/30, B64D 27/34, B64D 27/357, B64C 13/50, B64C 21/01, B64C 25/10, B64C 1/00, B64C 9/00

(54) **ELECTRIC PROPULSION AIRCRAFT**

(71) Applicant: Lilium GmbH, 82234 Wessling (DE)
(72) Inventor: The designation of the inventor has not yet been filed
(74) Representative: Ter Meer Steinmeister & Partner

(57) **Abstract**

The present invention relates to an electrical propulsion aircraft (100), comprising a fuselage (102) for hosting payload with a tail section (104), a center section (106) and a nose section (108), a pair of wings (100) attached to the fuselage (102) for providing lift to the aircraft (100), an empennage (112) attached on the tail section (104) of the fuselage (102) for providing stability during flight of the aircraft (100), an electric propulsion system for providing thrust to the aircraft, comprising a plurality of battery modules (114) for storing electrical energy, a plurality of propulsion units (118, 118a) attached to the empennage (112) or the tail section (104) of the fuselage (102), wherein each propulsion unit (118, 118a) comprises an electric motor for driving a propulsor. According to the invention, the empennage (112) comprises a horizontal (112a) stabilizer provided with at least one of the propulsion units (118) on each of its sides with respect to a longitudinal centerline (C) of the aircraft (100) for providing thrust and directional control of the aircraft (100).

## Description

The present invention generally relates to electrical propulsion aircraft, which make beneficial use of particular features of the electrical propulsion systems used therein.

Traditionally, aircraft propulsion has been provided by means of piston or jet engines, both of which burn fuel and are therefore not considered environmentally sustainable. Recently, different designs and types of aircraft with electrical propulsion systems have been proposed, for example an eVTOL aircraft designed by the present applicant, in which a plurality of electrically driven ducted fan engines are pivotably arranged on trailing edges of wings and canard wings in order to be displaceable between different angular states, in which their thrust can be directed in vertical and horizontal as well as arbitrary intermediate directions for achieving maximum flexibility and maneuverability in different stages of VTOL and horizontal flight.

While such aircraft designs are very promising, the properties and advantages of electrical propulsion systems for aircraft may also be employed in various other types and designs of aircraft, and it is the achievement of the inventors of the present invention to have identified possible alternative aircraft design features, which can vastly benefit from electrical propulsion systems in an inventive and synergetic manner.

In particular, the present invention relates to an electrical propulsion aircraft, comprising a fuselage for hosting payload with a tail section, a central section and a nose section, a pair of wings attached to the fuselage for providing lift to the aircraft, an empennage attached on the tail section of the fuselage for providing stability during the flight of the aircraft, an electrical propulsion system for providing thrust to the aircraft, comprising a plurality of battery modules for storing electrical energy and a plurality of propulsion units attached to the empennage or the tail section of the fuselage, wherein each propulsion unit comprises an electric motor for driving a propulsor. According to a first aspect of the present invention, the empennage in turn comprises a horizontal stabilizer provided with at least one of the propulsion units on each of its sides with respect to a longitudinal center line of the aircraft for providing thrust and directional control of the aircraft.

This particular design of an electrical propulsion aircraft, in which on both sides of the horizontal stabilizer electrical propulsion units are positioned for providing both thrust and directional control of the aircraft, relies on the fact that due to their extremely low inertia as compared with piston or jet engines, electrical propulsion systems can be controlled in such a highly reactive manner that directional control of corresponding aircraft can be performed by employing differential thrust by means of correspondingly positioned electrical propulsion units. This design facilitates control and stability of the aircraft and allows to reduce the complexity of the aerodynamic control surfaces of the corresponding aircraft.

In particular, said propulsion units may be positioned directly attached to the horizontal stabilizer or may be provided with nacelles, which are in turn attached to or integrated with the horizontal stabilizer. These nacelles may provide a certain distance between the horizontal stabilizer and the propulsion units themselves, which may in some designs and configurations be beneficial with respect to aerodynamic properties of the stabilizer, for example in order to achieve a laminar air flow in the corresponding areas of the aircraft, and with respect to the efficiency of the propulsion units.

In order to provide additional thrust for the aircraft, each of the wings may also be equipped with at least one of the propulsion units, in particular integrated into or arranged under and/or in front of the wings. Again, the corresponding propulsion units may be attached directly to the corresponding wing of may be provided with nacelles to achieve a certain distance between the wing and the corresponding propulsion unit. The provision of such additional engines allows for increasing the overall maximum possible thrust output of the electrical propulsion system of the aircraft, which may in particular be relevant during high load situations, such as takeoffs and steep ascents.

Furthermore, in a central section of the empennage with respect to the longitudinal centerline of the aircraft, at least one further propulsion unit may be provided for ingesting the fuselage wake. Such an arrangement of an additional propulsion unit relies on a further beneficial property of the electrical propulsion system of the aircraft, namely to be able to effectively control airflow in certain parts of the aircraft in order to improve its aerodynamic properties and efficiency as well as its aerodynamic stability. It is therefore assumed that providing such a centrally positioned additional propulsion unit may in certain cases be considered an inventive concept in a generic electrical propulsion aircraft according to the preamble of the present main claim by its own even without the context of the above-described first inventive aspect of the present application.

As already briefly noted above, the propulsors of the propulsion units may be electrically driven propellers or ducted fans, wherein in particular embodiments propulsion units formed as ducted fans have shown high promise with respect to their efficiency, noise profile as well as safety features, wherein in particular aircraft with a high number of small ducted fans appear superior due to the reduced weight and inertia of the individual engines as well as intrinsically high levels of redundancy.

Furthermore, the empennage of the aircraft according to the present invention may further comprise a vertical stabilizer, preferably provided with at least one propulsion unit. Therein, the corresponding at least one propulsion unit may be positioned centrally, i.e. on the longitudinal centerline of the aircraft, or multiple corresponding propulsion units may be provided on each side of the vertical stabilizer. It shall in this context be pointed out that in embodiments with at least two propulsion units provided at the vertical stabilizer, these propulsion units may already form the principle propulsion units discussed above, which are provided on each of the sides of the horizontal stabilizer with respect to the longitudinal centerline of the aircraft.

Additionally or alternatively, at least some parts of the fuselage, the wings, the propulsion units and/or the horizontal stabilizer may be configured to provide laminar airflow at least during cruise or horizontal flight conditions of the aircraft. For this purpose, suitable surface properties as well as geometrical shapes of the corresponding components of the aircraft may be employed in order to increase efficiency and to reduce drag. Similar to the integration of a further propulsion unit for ingesting the fuselage wake, this additional feature may in certain cases be considered an inventive concept in a generic electrical propulsion aircraft according to the preamble of the present main claim by its own even without the context of the above-described first inventive aspect of the present application.

According to a second aspect of the present invention, for which protection is sought both independently and in combination with the above-described first aspect, a laminar flow control system with active suction elements may be provided to the fuselage for achieving laminar airflow, wherein preferably the laminar flow control system comprises high-voltage electric suction pumps and/or the air sucked in by the laminar flow control system is guided to at least one of the propulsion units for generating thrust. The use of such a laminar flow control system may be implemented in a synergetic manner with the electrical propulsion system of the aircraft, for example by relying on a single high-voltage system throughout the aircraft and/or by sharing additional periphery components, such as a unified cooling system, etc.

In one particular embodiment, the laminar flow system may comprise a plurality of ring-shaped suction openings or arrays of suction openings, which each extend around at least part of the circumference of the fuselage and are spaced apart along the longitudinal direction of the fuselage. In this manner, an optimized airflow around the fuselage may be achieved, wherein the suction openings or arrays of suction openings may be positioned along the fuselage in an optimized manner taking into account aerodynamic features of the aircraft as well as its intended cruise speed.

Furthermore, each of the wings of the aircraft according to the present invention may be fitted with a set of ailerons, of which at least one aileron per wing has split control surfaces. This arrangement together with the above-discussed horizontal stabilizer may already be sufficient for yaw control of the aircraft without requiring a vertical fin. Thus, in certain embodiments of the present aircraft, the empennage may be devoid of a vertical tail plane which reduces the overall weight of the aircraft as well as manufacturing costs.

In order to be able to pilot the aircraft according to the invention, it may further comprise a fly-by-wire control system, which is adapted to command the propulsion units for providing differential thrust for achieving directional control of the aircraft. In such a manner, the differential thrust of the propulsion units together with any additional aerodynamic control surfaces provided at the aircraft in a controllable manner may be employed for any required directional control of the aircraft, with respect to all of its principal axes. In particular, the fly-by-wire control system may further be adapted to command the ailerons of each wing as well.

While numerous different embodiments and variants of the fuselage and wing design of the aircraft according to the present invention are conceivable, it may be beneficial concerning the handling and efficiency of the aircraft to position the battery modules of the electrical propulsion system in the lower part of the fuselage and/or the wing roots and/or over substantially the entire wing span, wherein preferably the battery modules are positioned such that a larger percentage of their mass is located in front of the wings than behind the wings. Compared to piston or jet-powered aircraft, which are burning fuel during flight and therefore have to be trimmed in accordance with the reduced weight resulting from the burning of fuel, for example by pumping fuel between different individual tanks located in their fuselage and wings, battery-powered electrical propulsion aircraft are not facing such challenges, since the weight of corresponding batteries does not change during flight. Therefore, by providing the batteries in a suitable manner, the trim of the aircraft may be optimized in its inception stage without any necessary later adjustment.

Furthermore, the fuselage at least in its central section may be formed in a flat oval shape and may preferably house a cabin in a single-aisle configuration, in particular with a three-plus-three seating configuration and/or in a pressurized cabin configuration. By employing such a flat oval shape for the cross section of the fuselage, beneficial aerodynamic properties may be achieved together with the horizontal stabilizer empennage, in particular in embodiments, which are devoid of a vertical tail plane. It shall at this point be noted that low-wing, mid-wing and high-wing configurations are equally conceivable for the aircraft according to the present invention.

Furthermore, the aircraft may comprise a landing gear in a retractable tricycle configuration, wherein preferably at least a part of the landing gear is retractable into the fuselage of the aircraft, also in order to provide an optimal interplay with the remaining above-described features and components of the aircraft.

Further features and advantages of the present invention will become even clearer from the following discussion of embodiments thereof, when taken together with the enclosed figures, which in particular show:
- Fig. 1: a plan view of a first embodiment of an aircraft according to the present invention;
- Fig. 2: an elevated rear view of the aircraft of Fig. 1;
- Fig. 3: a cross-sectional front view of a variant of the aircraft of Figs. 1 and 2;
- Fig. 4: a schematic view of yet another variant of the aircraft of Figs. 1 and 2; and
- Fig. 5: a second embodiment of an aircraft according to the invention.

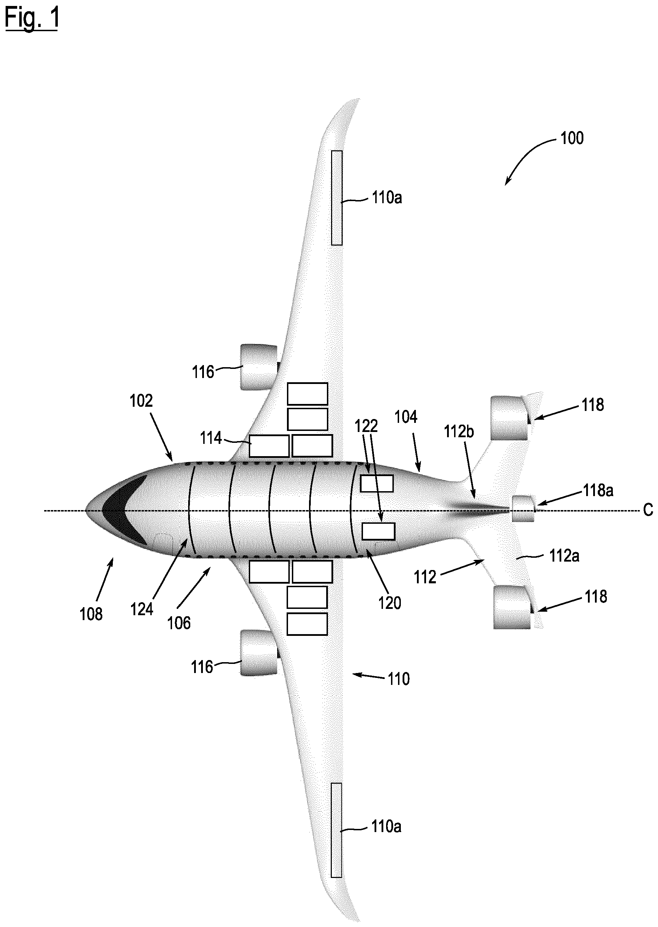

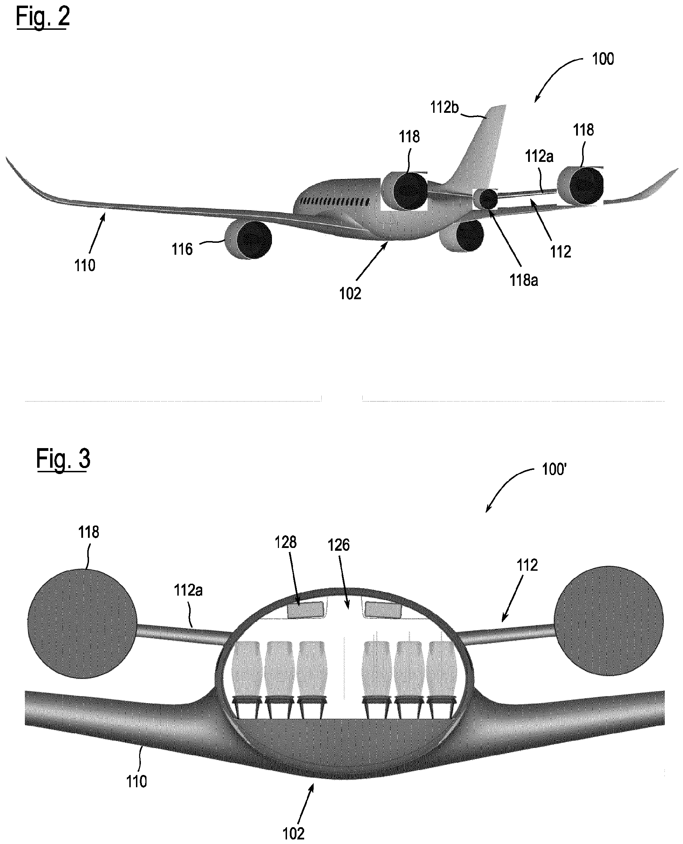

In Fig. 1 and 2, a first embodiment of an electrical propulsion aircraft is shown in a plan view and an elevated rear view and generally denoted with reference numeral 100. The aircraft 100 comprises a fuselage 102 for hosting payload and passengers with a tail section 104, a center section 106 and a nose section 108. It can be seen in Fig. 1 that the cabin for hosting the passengers of the aircraft is located in the center section 106 of the fuselage, while the nose section 108 houses the cockpit for the pilots thereof.

Furthermore, the aircraft 100 comprises a pair of wings 110, which are attached to the fuselage 102 in a low-wing configuration, however, in alternative variants of the aircraft, mid-wing and high-wing configurations are equally conceivable. In addition to the wings 110, the aircraft 100 comprises an empennage 112 attached on the tail section 104 of the fuselage 102 for providing stability during flight of the aircraft 100. Said empennage 112 comprises a horizontal stabilizer 112a and a vertical tail plane 112b, wherein in certain variants of the aircraft 100, no vertical tail plane might be provided with its stabilizing features entirely provided by different components of the respective aircraft, including the engines provided to the horizontal stabilizer 112a discussed below.

Fig. 1 also shows different components of the electric propulsion system of the aircraft, namely a number of propulsion units in the form of electrically driven ducted fans as well as schematically shown battery modules 114 located in the roots of the wings 110 and center section 106 of the fuselage 102. It shall be pointed out that even though only a small number of battery modules 114 are shown in Fig. 1 for reasons of visibility, corresponding battery modules may be positioned in the entire fuselage and over the entire wingspan, depending on the general structural design of the aircraft 100 and the sizes and shapes of the employed battery modules.

The aircraft 100 of Fig. 1 comprises in total five propulsion units in the form of electrically driven ducted fan engines, two of which are provided to the wings 110 and denoted with reference numeral 116, two of which are provided to the horizontal stabilizer 112a and denoted with reference numeral 118 and one of which is positioned centrally at the tail end of the empennage 112 and denoted with reference numeral 118a. While the propulsion units 116 of the wings 110 are mainly provided for creating thrust, the propulsion units 118 of the horizontal stabilizer 112a with their duct surfaces replacing part of the horizontal stabilizer surface contribute to the directional stability of the aircraft 100 and are also used for directional control thereof. For this purpose, the propulsion units 118 of the horizontal stabilizer 112a are provided one on each side with respect to the longitudinal centerline C of the aircraft 100 and can be controlled in such a manner that rotations of the aircraft 100 around its yaw axis are achieved by providing differential thrust with the two propulsion units 118 of the horizontal stabilizer 112a. In order to further improve the controllability of the aircraft 100 with respect to rotations around its yaw axis, the wings 110 are equipped with split ailerons 110a which may be controlled by a fly-by-wire system of the aircraft 100 in coordination with the propulsion units 118 to achieve corresponding rotations around the yaw axis.

It shall at this point be pointed out that the increased mass at the tail of the aircraft 100 due to the positioning of the engines 116, 118 and 118a is balanced out by the weight reduction of eliminating vertical and horizontal stabilizer surfaces and the positioning of the battery modules 114 in suitable parts of the fuselage 102 and the wings 110. It also has to be kept in mind that electrical engines as such have a reduced weight compared to piston or jet engines or gas turbines.

Furthermore, the single propulsion unit 118a positioned at the tail end of the empennage 112 not only provides additional thrust to propelling the aircraft 100 but also contributes to ingesting the wake of the fuselage in order to improve the aerodynamic properties of the aircraft 100.

It shall also be pointed out that in the aircraft 100 of Fig. 1, additional measures have been taken to achieve laminar airflow over wide parts of the aircraft. While the nose of the fuselage 102, the wings 110, the horizontal stabilizer 112a and the duct surfaces of the engines 114, 116 and 118 may be formed in such a manner and with such material properties that a laminar flow is achieved naturally, the aircraft 100 is further equipped with a laminar flow control system, shown schematically in Fig. 1 and denoted with reference numeral 120. Said laminar flow control system 120 comprises high-voltage electric suction pumps 122 and a plurality of ring-shaped suction openings 124 extending around the circumference of the fuselage 102 spaced apart along the longitudinal direction of the aircraft 100. Herein, the laminar control system is implemented in a synergetic manner with the electrical propulsion system of the aircraft by relying on a single high-voltage system throughout the aircraft 100 and by sharing additional periphery components, such as a unified cooling system.

Fig. 3 now shows a sectional front view of the variant 100' of the aircraft 100 of Fig. 1 and 2 briefly mentioned above, in which no vertical tail plane or vertical stabilizer 112b is provided to the empennage 112. However, the features discussed below with respect to the fuselage and cabin design of the aircraft 100' of Fig. 3 is equally applicable to the aircraft of Fig. 1 and 2 and also the further variants and embodiments discussed below.

As can be seen in Fig. 3, the aircraft comprises a low-wing configuration and the fuselage 102 in its central section is formed in a flat oval shape and houses a pressurized cabin 126 in a single aisle configuration, in particular with a 3 +3 seating configuration. By providing said flat oval cabin configuration, the fuselage surface relative to the cabin floor as well as cabin liner and insulation surface and weight can be reduced together with window surface and aisle surface. On the other hand, the available volume for battery packs in the lower part of the fuselage 102 is increased in a similar manner as for cabin luggage in overhead compartments 128.

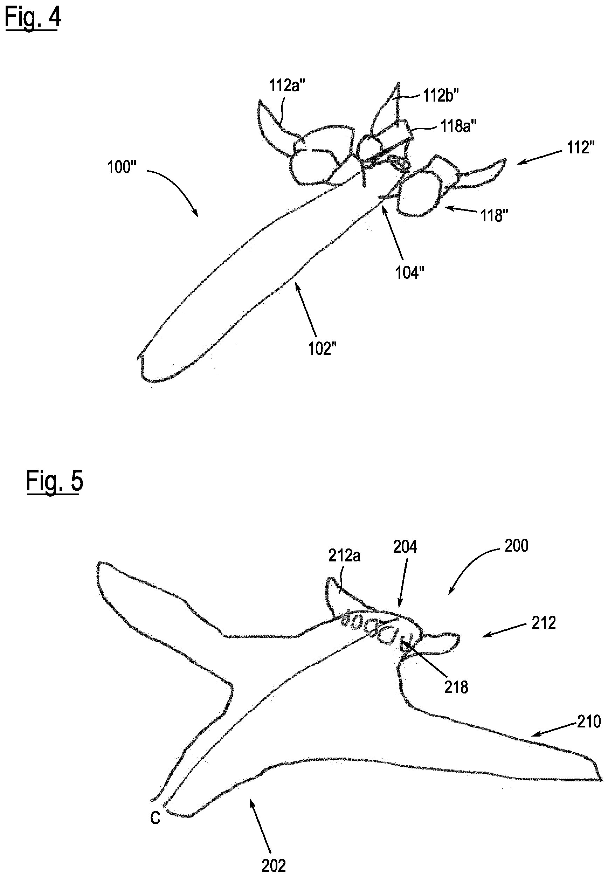

Fig. 4 shows a schematic view of yet another variant of the aircraft of Figs. 1 and 2 denoted 100", differing only in the design of the empennage 112". In particular, while once again two propulsion unis 118" are integrated with the horizontal stabilizer 112a" of the empennage 112", the single additional central propulsion unit 118a" is in a similar manner integrated into the vertical stabilizer 112b" in order to provide additional thrust and to cause laminar airflow in the tail section 104" of the fuselage 102". It shall be noted that while the main wings of the aircraft 100" are not shown in Fig. 4, they may in a similar manner be arranged in all of a low-wing, mid-wing oder high-wing configuration.

In contrast, Fig. 5 shows a second embodiment of an aircraft according to the invention denoted with reference numeral 200, which is constructed as a flying wing or blended wing design in which the fuselage 202 and the main wings 210 are formed in an integrated manner. In such a design, the aerodynamic lift of the aircraft 200 is mainly provided by the integrated fuselage-wing structure, while an additional empennage 212 with a horizontal stabilizer 212a yet without a vertical stabilizer is provided at the tail section 204 of the integrated fuselage 202. In the design according to Fig. 5, while additional engines may be provided to the wings 210, a number of propulsion units 218 are positioned at the tail section 204 of the fuselage 202 in the area of the horizontal stabilizer 212a with at least one propulsion unit 218 on each side with respect to the longitudinal centreline C of the aircraft. Again, an aircraft 200 with such a design and engine configuration can beneficially be equipped with electrical propulsion units 218 used for both creating thrust and directional control of the aircraft.

## Claims

1. Electrical propulsion aircraft (100), comprising:
- a fuselage (102) for hosting payload with a tail section (104), a center section (106) and a nose section (108);
- a pair of wings (100) attached to the fuselage (102) for providing lift to the aircraft (100);
- an empennage (112) attached on the tail section (104) of the fuselage (102) for providing stability during flight of the aircraft (100);
- an electric propulsion system for providing thrust to the aircraft, comprising:
∘ a plurality of battery modules (114) for storing electrical energy;
∘ a plurality of propulsion units (118, 118a) attached to the empennage (112) or the tail section (104) of the fuselage (102), wherein each propulsion unit (118, 118a) comprises an electric motor for driving a propulsor;
**characterized in that** the empennage (112) comprises a horizontal (112a) stabilizer provided with at least one of the propulsion units (118) on each of its sides with respect to a longitudinal centerline (C) of the aircraft (100) for providing thrust and directional control of the aircraft (100).

2. Aircraft (100) according to claim 1,
wherein each of the wings (110) is also equipped with at least one of the propulsion units (116) in particular integrated into or arranged under and/or in front of the wings (110).

3. Aircraft (100) according to any of the preceding claims,
wherein in a central section of the empennage (112) with respect to the longitudinal centerline (C) of the aircraft (100) at least one further propulsion unit (118a) is provided for ingesting the fuselage wake.

4. Aircraft (100) according to any of the preceding claims,
wherein the propulsors of the propulsion units (116, 118, 118a) are propellers or ducted fans.

5. Aircraft (100) according to any of the preceding claims,
wherein the empennage (112) further comprises a vertical stabilizer (112b), preferably provided with at least one propulsion unit (118a).

6. Aircraft (100) according to any of the preceding claims,
wherein at least some parts of the fuselage (102), the wings (110), the propulsion units (116, 118, 118a) and/or the horizontal stabilizer (112a) are configured to provide laminar airflow at least during cruise flight conditions of the aircraft (100).

7. Aircraft (100) according to the preamble of claim 1 and optionally the features of the characterizing portion of claim 1 and/or any of claims 2 to 6,
wherein a laminar flow control system (120) with active suction elements is provided to the fuselage (102) for achieving laminar airflow, wherein preferably the laminar flow control system (120) comprises high-voltage electric suction pumps (122) and/or the air sucked in by the laminar flow control system (120) is guided to at least one of the propulsion units for generating thrust.

8. Aircraft (100) according to claim 7,
wherein the laminar flow system (120) comprises a plurality of ring-shaped suction openings (124) or arrays of suction openings which each extend around at least part of the circumference of the fuselage (102) and are spaced apart along the longitudinal direction of the fuselage (102).

9. Aircraft (100) according to any of the preceding claims,
wherein each of the wings (110) is fitted with a set of ailerons (110a), of which at least one aileron (110a) per wing has split control surfaces.

10. Aircraft (100) according to any of the preceding claims,
wherein the empennage (112) is devoid of a vertical tail plane.

11. Aircraft (100) according to any of the preceding claims,
further comprising a fly-by-wire control system, which is adapted to command the propulsion units (116, 118, 118a) for providing differential thrust for achieving directional control of the aircraft (100).

12. Aircraft (100) according to claims 9 and 11,
wherein the fly-by-wire control system is further adapted to command the ailerons (110a) of each wing (110).

13. Aircraft (100) according to any of the preceding claims,
wherein the battery modules (114) of the electric propulsion system are positioned in the lower part of the fuselage (102) and/oder the wing (110) roots and/or over substantially the entire wingspan, wherein preferably the battery modules (114) are positioned such that a larger percentage of their mass is located in front of the wings (110) than behind the wings (110).

14. Aircraft (100) according to any of the preceding claims,
wherein the fuselage (102) at least in its central section (106) is formed in a flat oval shape and preferably houses a cabin (126) in a single aisle configuration, in particular with a 3 +3 seating configuration and/or in a pressurized cabin configuration.

15. Aircraft (100) according to any of the preceding claims,
further comprising a landing gear in a retractable tricycle configuration, wherein preferably at least a part of the landing gear is retractable into the fuselage (102) of the aircraft.
